# FASCICULE DE BREVET EUROPEEN

(11) **EP 3 439 950 B1**
(45) Date de publication et mention de la délivrance du brevet: **04.11.2020**
(21) Numéro de dépôt: 17717808.4
(22) Date de dépôt: 31.03.2017
(51) Int. Cl.: B64C 1/14, B60J 3/06, B64D 45/00

(54) **HUBLOT D'HABILLAGE INTÉRIEUR POLARISABLE COMPRENANT UN DISPOSITIF DE FIXATION AMOVIBLE**
POLARISIERBARE INNENVERKLEIDUNG EINES FENSTERS MIT LÖSBARER BEFESTIGUNGSVORRICHTUNG
POLARISIBLE INTERIOR TRIM WINDOW COMPRISING A REMOVABLE FIXING DEVICE

(30) Priorité: 05.04.2016 FR 1652979
(43) Date de publication de la demande: 13.02.2019
(73) Titulaire: Vision Systems Aeronautics, 69530 Brignais (FR)
(72) Inventeur: PUTMAN, Carl, 69130 Ecully (FR)
(74) Mandataire: Verriest, Philippe
(86) Numéro de dépôt international: PCT/FR2017/050762
(87) Numéro de publication internationale: WO 2017/174906

(56) Documents cités:
- FR-A1- 3 004 162
- US-A- 2 311 840
- US-A- 3 521 300
- US-A- 3 880 496
- US-B1- 7 535 614

## Description

La présente invention concerne un hublot d'habillage intérieur comprenant un film polarisable agencé pour faire varier le degré d'opacité de la lumière traversant ledit hublot.

Il est connu d'utiliser un hublot comprenant un film polarisable. Le film polarisable est disposé sur une couche interne du hublot et est agencé pour faire varier le degré d'opacité du hublot. Un tel hublot est connu de FR 3 004 162 A1, qui est considéré comme l'art antérieur le plus proche et décrit les caractéristiques du préambule de la revendication 1.

Le degré d'opacité du hublot peut varier de la transparence à l'opacité totale. Pour ce faire le film polarisable comprend au moins une couche conductrice polarisée.

Cette couche conductrice polarisée est soumise à une alimentation électrique. La variation de la puissance de l'alimentation électrique engendre la variation du degré d'opacité.

Ainsi il est possible de régler l'intensité lumineuse traversant le hublot. Ce système donne satisfaction en ce que le degré d'opacité du hublot peut être ajusté en fonction de la luminosité extérieure.

Toutefois, une alimentation électrique est nécessaire pour qu'il soit possible de voir à travers le hublot. Ainsi, lorsque l'alimentation électrique est coupée suite à une panne, le film polarisable devient totalement opaque.

Cette situation peut être critique selon l'utilisation qui est faite du hublot. L'opacité non souhaitée du hublot peut même engendrer des problèmes de sécurité, par exemple s'il s'agit d'un hublot d'un véhicule.

La présente invention vise à résoudre tout ou partie des inconvénients mentionnés ci-dessus.

Dans le présent texte, les verbes « raccorder », « connecter », « relier », « alimenter » et leurs dérivés se rapportent à une communication électrique entre deux composants distincts.

Egalement dans le présent texte, le terme véhicule se rapporte à tout type de véhicule : un aéronef comme un avion ou un hélicoptère, un véhicule terrestre comme une voiture ou un camion, ou encore un train ou un bateau.

A cet effet, la présente invention concerne un hublot d'habillage intérieur apte à coopérer avec un support d'un véhicule en une position de coopération, ledit hublot d'habillage intérieur comprenant :
- un film polarisable,
- un dispositif d'application d'une tension au film polarisable agencé pour faire varier un degré d'opacité dudit film polarisable, le dispositif d'application d'une tension étant agencé pour être connecté à une alimentation électrique externe,
- un dispositif de fixation amovible agencé pour fixer de manière amovible le hublot d'habillage intérieur au support en position de coopération,

le dispositif de fixation amovible comprenant un élément de verrouillage apte à être déplacé par un utilisateur entre une position de verrouillage dans laquelle le hublot d'habillage intérieur est fixé au support et une position de déverrouillage dans laquelle le hublot d'habillage intérieur est apte à être désolidarisé du support.

Le dispositif de fixation amovible permet, par le passage de la position de verrouillage à la position de déverrouillage, de désolidariser aisément le dispositif de fixation amovible.

Cette disposition permet à l'utilisateur d'enlever le hublot d'habillage intérieur du support rapidement et sans effort, ce qui est particulièrement utile lorsque le dispositif d'application d'une tension au film polarisable n'est plus apte à faire varier le degré d'opacité et que le film devient totalement opaque.

Cette situation peut arriver lorsque l'alimentation électrique externe est coupée, par exemple en cas de panne.

Le hublot d'habillage intérieur peut donc être enlevé même dans un cas de situation d'urgence comme une coupure générale de l'alimentation électrique dans un aéronef ou tout autre type de véhicule.

Selon un aspect de l'invention, le hublot d'habillage intérieur est agencé pour être utilisé comme opacifiant pour un hublot structurel extérieur d'un aéronef, en particulier d'un hublot structurel extérieur d'une cabine de pilotage ou cockpit de l'aéronef.

Selon un aspect de l'invention, l'élément de verrouillage comprend une commande manuelle apte à être sollicitée manuellement par un utilisateur pour disposer l'élément de verrouillage en position de verrouillage ou en position de déverrouillage.

Cette disposition permet à un utilisateur de disposer, simplement et sans avoir à utiliser d'outil, l'élément de verrouillage soit en position de verrouillage soit en position de déverrouillage.

Le hublot d'habillage intérieur peut donc être retiré de la position de coopération avec le support rapidement et aisément : l'utilisateur n'a qu'à disposer la commande manuelle en position de déverrouillage et enlever le hublot d'habillage intérieur du support.

Selon un aspect de l'invention, la commande manuelle est agencée pour être déplacée selon un degré de liberté entre la position de verrouillage et la position de déverrouillage.

Cette disposition permet d'une part à l'utilisateur de savoir, selon le positionnement de la commande manuelle, si l'élément de verrouillage est en position de verrouillage ou en position de déverrouillage et d'autre part de changer de position aisément en un seul mouvement.

Selon un aspect de l'invention, le degré de liberté de la commande manuelle entre la position de verrouillage et la position de déverrouillage est un degré de liberté rotatif ou hélicoïdal.

Cette disposition permet à l'utilisateur de disposer simplement et rapidement l'élément de verrouillage en position de verrouillage ou en position de déverrouillage puisqu'il n'a qu'à tourner la commande manuelle selon son degré de liberté.

Selon un aspect de l'invention, le passage de la position de verrouillage à la position de déverrouillage correspond à un déplacement d'un quart de tour de la commande manuelle.

Cette disposition permet de limiter le déplacement de la commande manuelle entre la position de verrouillage et la position de déverrouillage. Ainsi l'utilisateur peut très rapidement saisir la commande manuelle et passer de la position de verrouillage à la position de déverrouillage en tournant cette dernière d'un quart de tour.

Selon un aspect de l'invention, la commande manuelle présente une zone de préhension agencée pour permettre le retrait du hublot d'habillage intérieur de la position de coopération par l'utilisateur.

Cette disposition permet de faciliter le retrait de la position de coopération car après avoir déplacé la commande manuelle en position de déverrouillage, cette dernière peut être utilisée pour déplacer le hublot d'habillage intérieur.

Selon un aspect de l'invention, le dispositif de fixation amovible présente en outre un guide de verrouillage ménagé dans le hublot d'habillage intérieur, le guide de verrouillage étant agencé pour guider l'élément de verrouillage entre la position de verrouillage et la position de déverrouillage.

Le guide de verrouillage est intégré au hublot d'habillage intérieur, ce qui permet une installation simple du hublot d'habillage intérieur en position de coopération avec le support.

En effet, l'élément de verrouillage est soit compris dans le hublot d'habillage intérieur lors du montage en position de coopération soit ajouté ultérieurement en l'insérant dans le guide de verrouillage.

Selon un aspect de l'invention, le hublot d'habillage intérieur tel que décrit précédemment comprend au moins deux dispositifs de fixation amovible.

Cette disposition permet d'améliorer le maintien en position de verrouillage car chaque dispositif de fixation amovible correspond à un point de fixation du hublot d'habillage intérieur sur le support.

De préférence, le hublot d'habillage intérieur comprend quatre dispositifs de fixation amovible.

Ainsi la position de coopération est maintenue et la dimension de chaque dispositif de fixation peut être adaptée pour que le verrouillage soit effectif en position de verrouillage.

En effet, en utilisant quatre dispositifs de verrouillage stratégiquement disposés par rapport au hublot d'habillage intérieur, la dimension de chaque dispositif peut être limitée et le verrouillage rester efficace.

Selon un aspect de l'invention, le ou chaque dispositif de fixation amovible est ménagé dans un carter périphérique du hublot d'habillage intérieur.

Cette disposition permet un maintien optimal en position de coopération car le verrouillage du ou des dispositifs de verrouillage maintient la coopération de la périphérie du hublot d'habillage intérieur.

En position de verrouillage, la coopération avec le support n'est pas perturbée. En effet, aucun jeu ou décalage ne peut se créer entre la périphérie et le support : le hublot d'habillage intérieur est parfaitement maintenue en position de coopération.

Selon un aspect de l'invention, le hublot d'habillage intérieur tel que décrit précédemment comprend en outre une couche en un premier matériau agencée pour coopérer avec une couche en un deuxième matériau disposée sur le support, la coopération étant de type liaison amovible.

En d'autres termes, le premier matériau et le deuxième matériau constituent un ensemble anti-agrippant. Cette disposition permet un positionnement aisé du hublot d'habillage intérieur en position de coopération.

Il est alors également aisé pour l'utilisateur de passer de la position de verrouillage à la position de déverrouillage sachant que la coopération entre le hublot et le support est maintenue.

Selon un aspect de l'invention, le dispositif d'application de tension comprend un circuit de commande agencé pour faire varier un degré d'opacité dudit film polarisable, le circuit de commande étant ménagé dans le hublot d'habillage intérieur.

Cette disposition permet une installation simple du hublot d'habillage intérieur puisque le circuit de commande est intégré dans le hublot. Ainsi le positionnement du hublot en position de coopération est rapide puisque le circuit de commande n'est pas à installer séparément.

Selon un aspect de l'invention, le dispositif d'application de tension comprend une interface utilisateur pourvue d'une commande d'opacité et/ou d'un indicateur de réglage du degré opacité.

Cette disposition permet à l'utilisateur de commander directement le dispositif d'application de tension en vue de faire varier le degré d'opacité du hublot. Puisque l'interface utilisateur est intégrée au hublot, l'utilisateur peut faire varier l'opacité du hublot dès son installation. Il n'est pas nécessaire d'installer un système de commande déporté.

Selon un aspect de l'invention, l'interface utilisateur est ménagée dans le carter périphérique et/ou dans une portion vitrée du hublot d'habillage intérieur.

Selon un aspect de l'invention, l'interface utilisateur est agencée pour échanger des informations avec le circuit de commande via un raccordement filaire ou selon un protocole de communication sans fil par exemple par ondes radio.

Ainsi l'interface utilisateur peut être déportée et le degré d'opacité modifié à distance.

Selon un aspect de l'invention, la commande d'opacité comprend un bouton d'augmentation du degré d'opacité et/ou un bouton de diminution du degré d'opacité. De préférence, chaque bouton est de type capacitif.

Selon un aspect de l'invention, l'indicateur de réglage du degré opacité comprend un indicateur visuel du réglage du degré d'opacité. De préférence, l'indicateur visuel comprend au moins une diode électroluminescente. En particulier, l'indicateur visuel comprend au moins deux diodes électroluminescentes, par exemple cinq.

Selon un aspect de l'invention, le hublot d'habillage intérieur tel que décrit précédemment comprend un capteur de luminosité, le dispositif d'application de tension étant agencé pour que le degré d'opacité varie en fonction d'une mesure réalisée par le capteur de luminosité.

Cette disposition permet une régulation automatique du degré d'opacité du hublot d'habillage intérieur. Il n'est donc pas nécessaire que l'utilisateur règle le degré d'opacité.

Selon un aspect de l'invention, la commande d'opacité comprend un bouton pour que la régulation du degré d'opacité soit réalisée en fonction de la mesure réalisée par le capteur de luminosité.

Cette disposition permet à l'utilisateur d'avoir soit un réglage automatique du degré d'opacité soit un réglage manuel grâce aux boutons d'augmentation et de diminution du degré d'opacité. De préférence, chaque bouton est de type capacitif.

Selon un aspect de l'invention, le hublot d'habillage intérieur tel que décrit précédemment comprend au moins deux films polarisables, le dispositif d'application d'une tension étant agencé pour faire varier indépendamment le degré de d'opacité de chaque film polarisable.

Cette disposition permet d'avoir de deux zones du hublot d'habillage intérieur de degrés d'opacités différentes. Il est ainsi possible d'avoir une zone plus opacifiante que l'autre dans le but par exemple d'éviter à l'utilisateur d'avoir le soleil dans les yeux tout en conservant un bon éclairage grâce à la lumière du soleil.

Selon un aspect de l'invention, le film polarisable comprend plusieurs zones, le dispositif d'application d'une tension étant agencé pour faire varier indépendamment le degré d'opacité de chaque zone.

Pour obtenir le même effet, il est donc possible d'avoir un seul film polarisable comprenant plusieurs zones dont l'opacité est réglable indépendamment l'une de l'autre.

De préférence, le hublot d'habillage intérieur tel que décrit précédemment comprend au moins deux films polarisables, au moins un film polarisable présentant deux zones, le dispositif d'application d'une tension étant agencé pour faire varier indépendamment le degré d'opacité de chaque zone.

Selon un aspect de l'invention, le hublot d'habillage intérieur tel que décrit précédemment comprend en outre un raccord de connexion électrique agencé pour raccorder électriquement le hublot d'habillage intérieur à l'alimentation électrique externe.

Cette disposition permet d'utiliser l'alimentation électrique du véhicule dans lequel le hublot d'habillage intérieur est disposé. Le hublot ne comprend ainsi pas de batterie et il n'est donc pas nécessaire de le recharger régulièrement.

Selon un aspect de l'invention, le raccord de connexion est agencé pour être raccordé électriquement à l'alimentation électrique externe lors de la disposition en position de coopération.

Ainsi le raccordement électrique ne demande pas d'opération spécifique à l'utilisateur : il est automatique lorsque le hublot d'habillage intérieur est disposé en position de coopération.

De préférence le raccord de connexion est agencé pour être encliqueté à un raccord complémentaire de l'alimentation électrique externe lors de la disposition du hublot d'habillage intérieur en position de coopération.

Le raccord de connexion du hublot et le raccord complémentaire de l'alimentation électrique externe sont compris dans un dispositif de connexion électrique.

Selon un aspect de l'invention, ledit raccord de connexion électrique est agencé pour être raccordé à une alimentation électrique externe de type panneau photovoltaïque.

Cette disposition permet de ne plus dépendre de l'alimentation du véhicule, ce qui peut s'avérer utile en cas de panne cette dernière. De préférence l'alimentation électrique externe comprend plusieurs sources comme une alimentation interne du véhicule et/ou une alimentation en provenance du panneau photovoltaïque.

Selon un aspect de l'invention, le hublot d'habillage intérieur comprend un panneau photovoltaïque agencé pour être raccordé au raccord de connexion électrique, de préférence le panneau photovoltaïque étant ménagé dans le hublot d'habillage intérieur, en particulier dans une portion vitrée du hublot d'habillage intérieur.

Selon un aspect de l'invention, l'interface utilisateur comprend en outre un indicateur relatif à un niveau de charge d'une batterie du panneau photovoltaïque.

La présente invention concerne également un système d'habillage intérieur comprenant un hublot d'habillage intérieur tel que décrit ci-avant et un agencement de blocage agencé pour être ménagé dans le support, l'agencement de blocage comprenant une portion de coopération avec l'élément de verrouillage et une portion de blocage agencée pour coopérer avec l'élément de verrouillage en position de verrouillage de manière à empécher la désolidarisation du hublot d'habillage intérieur de l'agencement de blocage.

L'agencement de blocage est monté en premier lieu dans le support destiné à recevoir le hublot d'habillage intérieur et en second lieu le hublot est disposé en position de coopération.

Cette disposition permet une installation ou un remplacement rapide et aisé du hublot d'habillage intérieur.

La présente invention concerne en outre, un système de hublot polarisable comprenant :
- un système d'habillage intérieur tel que décrit ci-dessus pourvu d'un hublot d'habillage intérieur et d'un agencement de blocage et
- un hublot structurel extérieur dans lequel est ménagé le support destiné à coopérer avec le hublot d'habillage intérieur, l'agencement de blocage étant ménagé dans le support.

Cette disposition permet d'utiliser le hublot d'habillage intérieur comme un ajout sur un hublot structurel extérieur dans le but d'opacifier ce dernier pour se protéger du soleil.

En cas de panne d'alimentation et pour des raisons de sécurité il est possible à tout moment pour l'utilisateur de passer en position de déverrouillage et de retirer le hublot d'habillage intérieur.

De toute façon l'invention sera bien comprise à l'aide de la description qui suit en référence aux dessins schématiques annexés représentant, à titre d'exemple non limitatif, une forme d'exécution de ce hublot.
Figure 1 est une vue en perspective de l'intérieur d'un cockpit d'avion.
Figure 2 est une vue en perspective d'un système de hublot polarisable.
Figure 3 est une vue en perspective d'un hublot d'habillage intérieur.
Figure 4 est une vue en perspective d'un hublot structurel extérieur.
Figure 5 est une vue en perspective du système de hublot polarisable présentant deux zones de degrés d'opacité différents.
Figure 6 est une vue en coupe d'un dispositif de fixation amovible du hublot d'habillage intérieur.
Figure 7 est une vue en perspective d'un élément de verrouillage et d'une interface utilisateur du hublot d'habillage intérieur.
Figure 8 est une vue de face de l'interface utilisateur.
Figure 9 est une vue en perspective d'un raccord de connexion électrique du hublot d'habillage intérieur.
Figure 10 est une vue en perspective d'un dispositif de connexion électrique du hublot d'habillage intérieur.

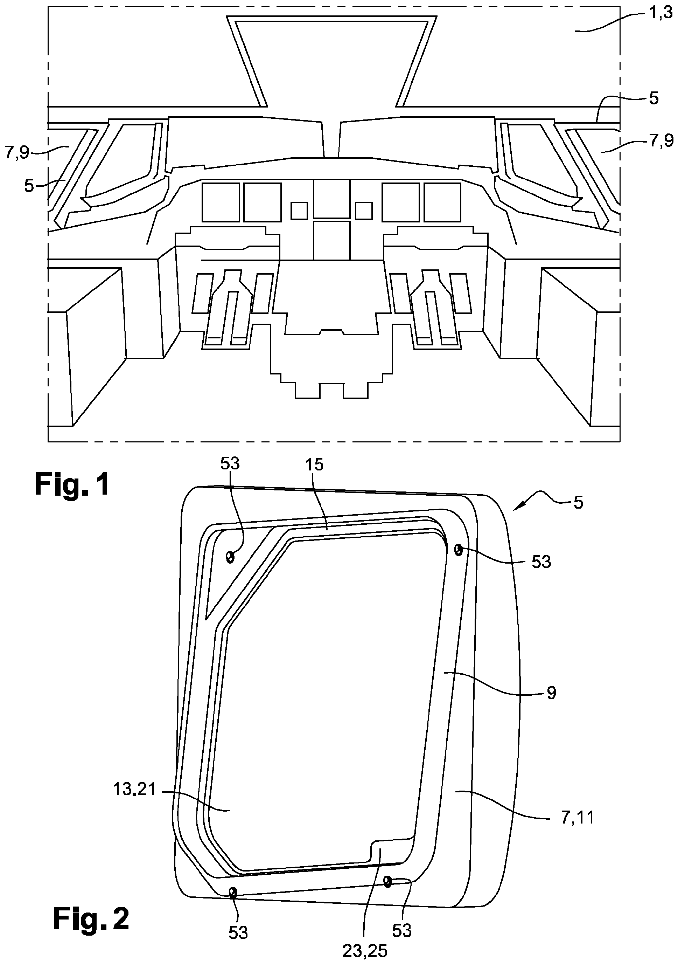

Comme illustré à la figure 1, un véhicule de type aéronef 1 comprend un cockpit 3 ou cabine de pilotage. Ici un cockpit 3 d'avion a été représenté. Un système de hublot polarisable 5 pour cockpit 3 d'avion comprend un hublot structurel extérieur 7 et un système d'habillage intérieur 9.

Comme illustré aux figures 2 à 6, le hublot structurel extérieur 7 comprend un support 11 du système d'habillage intérieur 9 ménagé dans le hublot structurel extérieur 11. Le système d'habillage intérieur 9 comprend un hublot d'habillage intérieur 13 apte à coopérer avec ledit support 11 en position de coopération comme illustré à la figure 2.

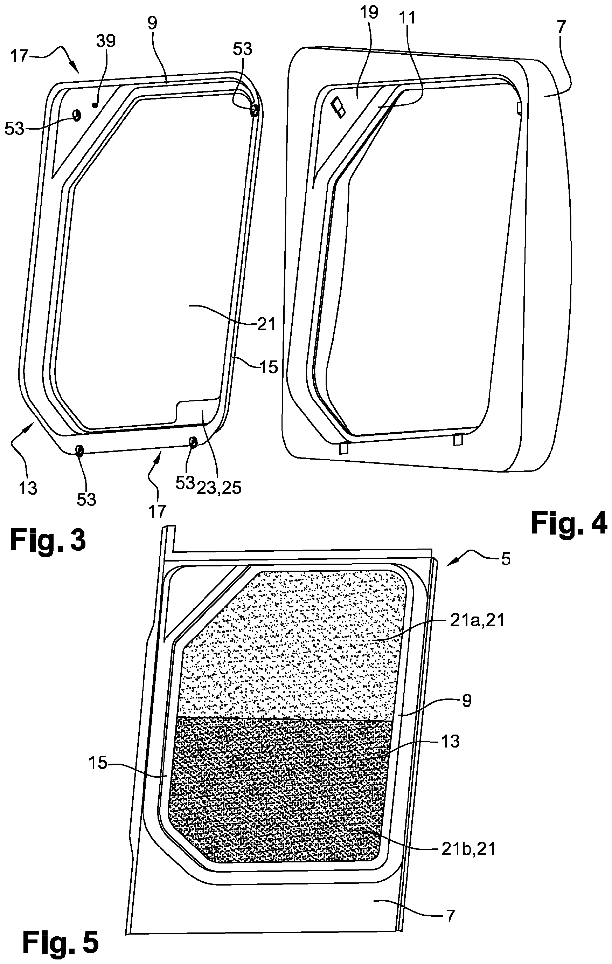

Comme illustré aux figures 3 et 4, le hublot d'habillage intérieur 13 comprend un carter périphérique 15 et une couche en un premier matériau 17 rapporté sur ou ménagé dans le carter périphérique 15.

Cette couche en un premier matériau 17 est agencée pour coopérer avec une couche en un deuxième matériau 19 rapportée sur ou ménagée dans le support 11. Le premier matériau et le deuxième matériau coopèrent selon une liaison de type amovible et constituent un ensemble anti-agrippant.

Cet ensemble anti-agrippant permet de disposer de manière simple et fiable le hublot d'habillage intérieur 13 en position de coopération avec le support 11.

Comme illustré à la figure 5, le hublot d'habillage intérieur 13 comprend au mois un film polarisable 21. Dans le mode de réalisation présenté il s'agit d'un film polarisable haut 21a et un film polarisable bas 21b.

Le hublot d'habillage intérieur 13 comprend également un dispositif d'application d'une tension 23 à chaque film polarisable 21. Le dispositif d'application de tension 23 est ainsi agencé pour faire varier indépendamment le degré d'opacité de chaque film polarisable 21.

Ainsi le hublot d'habillage intérieur 13 comprend deux zones pouvant avoir des degrés d'opacités différents.

Alternativement et selon un mode de réalisation non représenté, il est également possible de disposer d'un seul film polarisable 21 comprenant plusieurs zones ou de plusieurs films chacun comprenant au moins une zone. Dans ce cas, le dispositif d'application d'une tension 23 peut être agencé pour faire varier l'opacité de chaque zone indépendamment. L'effet obtenu est donc le même : disposer de plusieurs zones avec des degrés d'opacités différents.

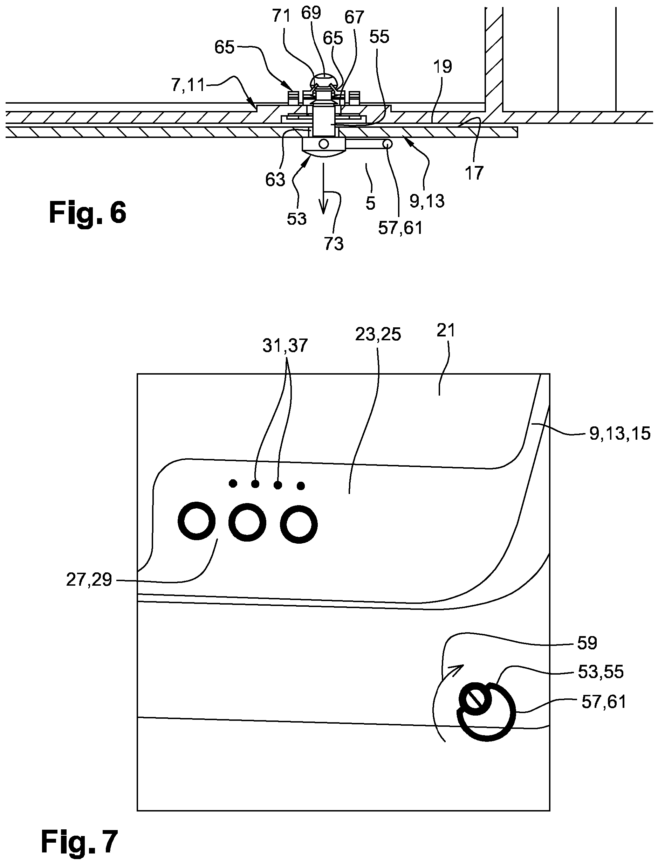

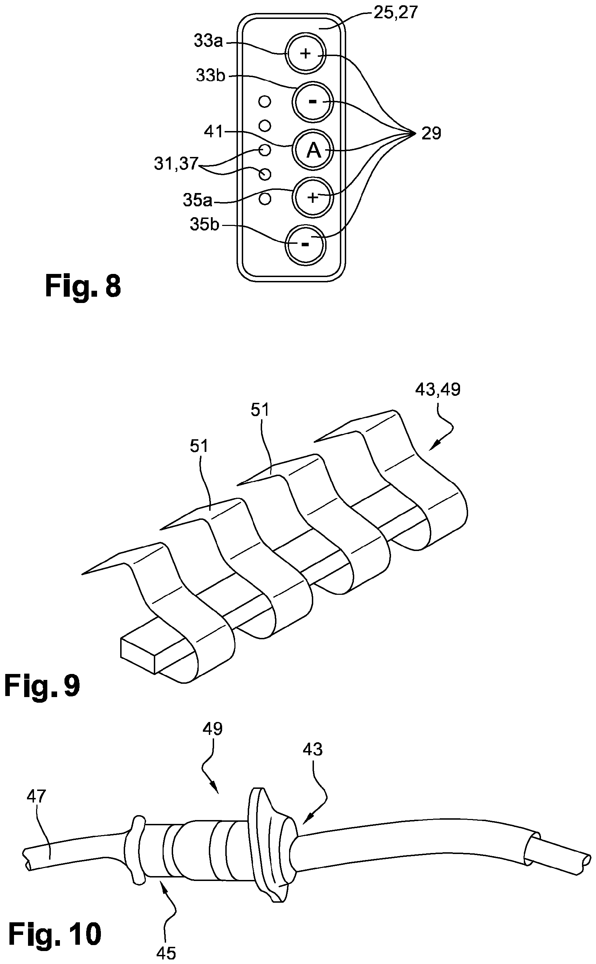

Comme illustré aux figures 7 et 8, le dispositif d'application de tension 23 comprend un circuit de commande 25 agencé pour faire varier indépendamment le degré d'opacité de chaque film polarisable 21.

Le dispositif d'application de tension 23 comprend également une interface utilisateur 27 pourvue d'une commande d'opacité 29 et d'un indicateur du réglage du degré d'opacité 31.

La commande d'opacité 29 comprend pour le film polarisable haut 21a un bouton d'augmentation 33a et un bouton de diminution 33b du degré d'opacité et pour le film polarisable bas 21b un bouton d'augmentation 35a et un bouton de diminution 35b du degré d'opacité.

Un utilisateur peut donc régler manuellement le degré d'opacité de chaque film polarisable 21.

L'indicateur de réglage du degré d'opacité 31 comprend un indicateur visuel pourvu de cinq diodes électroluminescentes 37, l'allumage de chaque diode 37 étant fonction de la tension appliquée à un film polarisable 21 correspondant.

Chaque diode 37 est agencée pour s'allumer à partir d'un pourcentage de la tension d'alimentation maximale du film polarisable 21 correspondant.

Ainsi lorsque ledit film 21 est opaque aucune diode n'est allumée et plus la tension augmente plus le nombre de diodes 37 allumées augmente. Ainsi chaque progression de 25% de la tension maximale une nouvelle diode 37 s'allume.

Ledit film polarisable 21 est transparent lorsque toutes les diodes sont allumées.

Selon un autre mode de régulation du degré d'opacité, le hublot d'habillage intérieur 13 comprend un capteur de luminosité 39 apte à mesurer une luminosité interne et/ou externe au cockpit.

Le dispositif d'application de tension 23 peut être selon ce type de fonctionnement, dit fonctionnement automatique, agencé pour faire varier le degré d'opacité de chaque film polarisable 21 en fonction de la mesure réalisée par le capteur de luminosité 39.

Pour établir ce mode de fonctionnement, l'interface utilisateur 27 comprend un bouton 41 qui une fois sollicité configure le dispositif d'application de tension 23 en fonctionnement automatique.

L'utilisateur peut donc choisir le mode de fonctionnement qui lui convient le mieux : soit le réglage manuel du degré d'opacité de chaque film polarisable 21 soit le réglage automatique.

Chaque bouton 33a, 33b, 35a, 35b, 41 de l'interface utilisateur 27 est de type capacitif.

Comme illustré aux figures 9 et 10, le dispositif d'application de tension 23 comprend en outre un raccord de connexion électrique 43 agencé pour être encliqueté à un raccord complémentaire 45 d'une alimentation électrique externe 47 provenant de l'avion. Le raccord de connexion électrique 43 et le raccord complémentaire 45 sont donc compris dans un dispositif de connexion électrique 49.

Selon l'alternative présentée à la figure 10, le raccord de connexion électrique 43 et le raccord complémentaire 45 sont deux prises devant être branchées manuellement par l'utilisateur avant de disposer le hublot d'habillage intérieur 13 en position de coopération.

Selon l'alternative présentée à la figure 9, le raccord de connexion électrique 43 comprend une pluralité de lamelles 51 agencées pour être raccordées par encliquetage au raccord complémentaire 45.

Dans ce cas, le raccordement électrique est réalisé lorsque l'utilisateur dispose le hublot d'habillage intérieur 13 en position de coopération sans qu'il ait d'opération préalable à réaliser.

Comme illustré aux figures 6 et 7, le hublot d'habillage intérieur 13 comprend également quatre dispositifs de fixation amovible 53, chaque dispositif 53 étant ménagé dans le carter périphérique 15.

Chaque dispositif de fixation amovible 53 est apte à fixer le hublot d'habillage intérieur 13 au support 11 en position de coopération de manière amovible comme décrit ci-dessous.

Chaque dispositif de fixation amovible 53 comprend un élément de verrouillage 55 apte à être déplacé par l'utilisateur entre une position de verrouillage dans laquelle le hublot d'habillage intérieur 13 est fixé au support 11 et une position de déverrouillage dans laquelle le hublot d'habillage intérieur 13 est apte à être désolidarisé du support 11.

Pour ce faire, l'élément de verrouillage 55 comprend une commande manuelle 57 agencée pour être déplacée selon un degré de liberté 59 rotatif ou hélicoïdal par l'utilisateur. Le déplacement entre la position de verrouillage et la position de déverrouillage est un quart de tour.

De plus la commande manuelle 57 présente une zone de préhension 61 agencée pour que l'utilisateur enlève le hublot d'habillage intérieur 13 du support 11 en position de déverrouillage.

Pour ce faire, chaque dispositif de fixation amovible 53 comprend un guide de verrouillage 63 ménagé dans le carter périphérique 15. Ce guide de verrouillage 63 coopère avec l'élément de verrouillage 55 de manière à n'autoriser son déplacement que selon le degré de liberté 59.

Ainsi, en position de déverrouillage, l'élément de verrouillage 55 reste solidaire du carter périphérique 15 lorsque l'utilisateur tire sur la zone de préhension 61 normalement au degré de liberté 59 dans l'intention d'enlever le hublot d'habillage intérieur 13.

Pour permettre à l'élément de verrouillage 55 de rester solidaire du support 11 en position de verrouillage, le système d'habillage intérieur 9 comprend un agencement de blocage 65 ménagé dans le support 11.

L'agencement de blocage 65 comprend une portion de coopération 67 qui est disposée dans la continuité du guide de verrouillage 63 en position de coopération. Cette portion de coopération 67 est destinée à recevoir l'extrémité 69 de l'élément de verrouillage 55 en position de coopération.

L'agencement de blocage 65 comprend en outre une portion de blocage 71 agencée pour empêcher le retrait de l'élément de verrouillage 55 en position de verrouillage.

Pour ce faire l'extrémité de l'élément de verrouillage est conformé pour être bloquer selon la direction normale 73 au degré de liberté 59, lorsque l'élément de verrouillage 55 est en position de verrouillage.

Ainsi l'agencement de blocage 65 est statique et lorsque l'élément de verrouillage 55 passe en position de verrouillage son extrémité 69 se trouve bloquée axialement par la portion de blocage 71 de l'agencement de blocage 65.

Il apparait ainsi que le hublot d'habillage intérieur 13 est facile à disposer en position de coopération car il suffit de le mettre en position sur le support 11.

De plus, cas d'urgence, il s'avère particulièrement efficace car il peut être désolidarisé du hublot structurel extérieur 7 aisément, c'est-à-dire en tournant d'un quart de tour chaque commande manuelle 57 puis en tirant dessus.

Ainsi si l'alimentation électrique externe 47 n'alimente plus le hublot d'habillage intérieur 13, l'utilisateur peut l'enlever facilement pour voir à l'extérieur de l'aéronef 1 par l'intermédiaire du hublot structurel extérieur 7.

Ce hublot d'habillage intérieur 13 est donc particulièrement bien adapté pour être disposé sur un hublot latéral de cockpit 3 d'avion car il répond à la double problématique d'atténuer les rayons de soleil incidents et de la sécurité.

Comme il va de soi, l'invention ne se limite pas à la seule forme d'exécution de ce hublot d'habillage intérieur 13, décrit ci-dessus à titre d'exemple, elle en embrasse au contraire toutes les variantes de réalisation.

## Revendications

1. Hublot d'habillage intérieur (13) apte à coopérer avec un support (11) d'un véhicule en une position de coopération, ledit hublot d'habillage intérieur (13) comprenant :
- un film polarisable (21),
- un dispositif d'application d'une tension (23) au film polarisable (21) agencé pour faire varier un degré d'opacité dudit film polarisable (21), le dispositif d'application d'une tension (21) étant agencé pour être connecté à une alimentation électrique externe (47),
- un dispositif de fixation amovible (53) agencé pour fixer de manière amovible le hublot d'habillage intérieur (13) au support (11) en position de coopération,
**caractérisé en ce que**
le dispositif de fixation amovible (53) comprend un élément de verrouillage (55) apte à être déplacé par un utilisateur entre une position de verrouillage dans laquelle le hublot d'habillage intérieur (13) est fixé au support (11) et une position de déverrouillage dans laquelle le hublot d'habillage intérieur (13) est apte à être désolidarisé du support (11).

2. Hublot d'habillage intérieur (13) selon la revendication 1, dans lequel l'élément de verrouillage (55) comprend une commande manuelle (57) apte à être sollicitée manuellement par un utilisateur pour disposer l'élément de verrouillage (55) en position de verrouillage ou en position de déverrouillage.

3. Hublot d'habillage intérieur (13) selon la revendication 2, dans lequel la commande manuelle (57) est agencée pour être déplacée selon un degré de liberté (59) entre la position de verrouillage et la position de déverrouillage.

4. Hublot d'habillage intérieur (13) selon la revendication 3, dans lequel le degré de liberté (59) de la commande manuelle (57) entre la position de verrouillage et la position de déverrouillage est un degré de liberté rotatif ou hélicoïdal.

5. Hublot d'habillage intérieur (13) selon l'une des revendications 1 à 4, dans lequel le dispositif de fixation amovible (53) présente en outre un guide de verrouillage (63) ménagé dans le hublot d'habillage intérieur (13), le guide de verrouillage (63) étant agencé pour guider l'élément de verrouillage (55) entre la position de verrouillage et la position de déverrouillage.

6. Hublot d'habillage intérieur (13) selon l'une des revendications 1 à 5, comprenant au moins deux dispositifs de fixation amovible (53).

7. Hublot d'habillage intérieur (13) selon l'une des revendications 1 à 6, comprenant en outre une couche en un premier matériau (17) agencée pour coopérer avec une couche en un deuxième matériau (19) disposée sur le support (11), la coopération étant de type liaison amovible.

8. Hublot d'habillage intérieur (13) selon l'une des revendications 1 à 7, dans lequel le dispositif d'application de tension (23) comprend un circuit de commande (25) agencé pour faire varier un degré d'opacité dudit film polarisable (21), le circuit de commande (25) étant ménagé dans le hublot d'habillage intérieur (13).

9. Hublot d'habillage intérieur (13) selon l'une des revendications 1 à 8, dans lequel le dispositif d'application de tension (23) comprend une interface utilisateur (27) pourvue d'une commande d'opacité (29) et/ou d'un indicateur de réglage du degré opacité (31).

10. Hublot d'habillage intérieur (13) selon l'une des revendications 1 à 9, comprenant un capteur de luminosité (39), le dispositif d'application de tension (23) étant agencé pour que le degré d'opacité varie en fonction d'une mesure réalisée par le capteur de luminosité (23).

11. Hublot d'habillage intérieur (13) selon l'une des revendications 1 à 10, comprenant au moins deux films polarisables (21a, 21b), le dispositif d'application d'une tension (23) étant agencé pour faire varier indépendamment le degré de d'opacité de chaque film polarisable (21a, 21b).

12. Hublot d'habillage intérieur (13) selon l'une des revendications 1 à 11, comprenant en outre un raccord de connexion électrique (43) agencé pour raccorder électriquement le hublot d'habillage intérieur (13) à l'alimentation électrique externe (47).

13. Système d'habillage intérieur (9) comprenant un hublot d'habillage intérieur (13) selon l'une des revendications 1 à 12 et un agencement de blocage (65) agencé pour être ménagé dans le support (11), l'agencement de blocage (65) comprenant une portion de coopération (67) avec l'élément de verrouillage (55) et une portion de blocage (71) agencée pour coopérer avec l'élément de verrouillage (55) en position de verrouillage de manière à empécher la désolidarisation du hublot d'habillage intérieur (13) de l'agencement de blocage (65).

14. Système de hublot polarisable (5) comprenant :
- un système d'habillage intérieur (9) selon la revendication 13 pourvu d'un hublot d'habillage intérieur (13) et d'un agencement de blocage (65) et
- un hublot structurel extérieur (7) dans lequel est ménagé le support (11) destiné à coopérer avec le hublot d'habillage intérieur (13), l'agencement de blocage (65) étant ménagé dans le support (11).

## Patentansprüche

1. Innenverkleidung eines Fensters (13), die imstande ist, mit einem Träger (11) eines Fahrzeugs in Zusammenwirkungsposition zusammenzuwirken, wobei die Innenverkleidung eines Fensters (13) umfasst:
- eine polarisierbare Folie (21),
- eine Vorrichtung zum Anlegen von Spannung (23) auf die polarisierbare Folie (21), die ausgebildet ist, um einen Opazitätsgrad der polarisierbaren Folie (21) zu verändern, wobei die Vorrichtung zum Anlegen von Spannung (21) ausgebildet ist, um an eine externe elektrische Versorgung (47) angeschlossen zu sein,
- eine Vorrichtung zur lösbaren Befestigung (53), die ausgebildet ist, um die Innenverkleidung eines Fensters (13) auf dem Träger (11) in Zusammenwirkungsposition lösbar zu befestigen,
**dadurch gekennzeichnet, dass**
die Vorrichtung zur lösbaren Befestigung (53) ein Verriegelungselement (55) umfasst, das zur Verlagerung durch einen Benutzer zwischen einer Verriegelungsposition, in welcher die Innenverkleidung eines Fensters (13) auf dem Träger (11) befestigt ist, und einer Entriegelungsposition, in welcher die Innenverkleidung eines Fensters (13) imstande ist, vom Träger (11) gelöst zu werden, imstande ist.

2. Innenverkleidung eines Fensters (13) nach Anspruch 1, wobei das Verriegelungselement (55) eine manuelle Steuerung (57) umfasst, die imstande ist, von einem Benutzer manuell beansprucht zu werden, um das Verriegelungselement (55) in Verriegelungsposition oder in Entriegelungsposition anzuordnen.

3. Innenverkleidung eines Fensters (13) nach Anspruch 2, wobei die manuelle Steuerung (57) zur Verlagerung gemäß einem Freiheitsgrad (59) zwischen der Verriegelungsposition und der Entriegelungsposition ausgebildet ist.

4. Innenverkleidung eines Fensters (13) nach Anspruch 3, wobei der Freiheitsgrad (59) der manuellen Steuerung (57) zwischen der Verriegelungsposition und der Entriegelungsposition ein rotatorischer oder ein schraubenförmiger Freiheitsgrad ist.

5. Innenverkleidung eines Fensters (13) nach einem der Ansprüche 1 bis 4, wobei die Vorrichtung zur lösbaren Befestigung (53) ferner eine Verriegelungsführung (63) aufweist, die in der Innenverkleidung eines Fensters (13) eingerichtet ist, wobei die Verriegelungsführung (63) ausgebildet ist, um das Verriegelungselement (55) zwischen der Verriegelungsposition und der Entriegelungsposition zu führen.

6. Innenverkleidung eines Fensters (13) nach einem der Ansprüche 1 bis 5, umfassend mindestens zwei Vorrichtungen zur lösbaren Befestigung (53).

7. Innenverkleidung eines Fensters (13) nach einem der Ansprüche 1 bis 6, umfassend ferner eine Schicht aus einem ersten Material (17), die ausgebildet ist, um mit einer Schicht aus einem zweiten Material (19) zusammenzuwirken, die auf dem Träger (11) angeordnet ist, wobei das Zusammenwirken vom Typ lösbare Verbindung ist.

8. Innenverkleidung eines Fensters (13) nach einem der Ansprüche 1 bis 7, wobei die Vorrichtung zum Anlegen von Spannung (23) einen Steuerschaltkreis (25) umfasst, der ausgebildet ist, um einen Opazitätsgrad der polarisierbaren Folie (21) zu verändern, wobei der Steuerschaltkreis (25) in der Innenverkleidung eines Fensters (13) eingerichtet ist.

9. Innenverkleidung eines Fensters (13) nach einem der Ansprüche 1 bis 8, wobei die Vorrichtung zum Anlegen von Spannung (23) eine Benutzerschnittstelle (27) umfasst, die mit einer Opazitätssteuerung (29) und/oder einer Einstellungsanzeige des Opazitätsgrads (31) versehen ist.

10. Innenverkleidung eines Fensters (13) nach einem der Ansprüche 1 bis 9, umfassend einen Lichtstärkesensor (39), wobei die Vorrichtung zum Anlegen von Spannung (23) ausgebildet ist, damit sich der Opazitätsgrad in Abhängigkeit von einer von dem Lichtstärkesensor (23) durchgeführten Messung verändert.

11. Innenverkleidung eines Fensters (13) nach einem der Ansprüche 1 bis 10, umfassend mindestens zwei polarisierbare Folien (21a, 21b), wobei die Vorrichtung zum Anlegen von Spannung (23) ausgebildet ist, um den Opazitätsgrad jeder polarisierbaren Folie (21a, 21b) unabhängig zu verändern.

12. Innenverkleidung eines Fensters (13) nach einem der Ansprüche 1 bis 11, umfassend ferner einen elektrischen Verbindungsanschluss (43), der ausgebildet ist, um die Innenverkleidung eines Fensters (13) an die externe elektrische Versorgung (47) anzuschließen.

13. Innenverkleidungssystem (9), umfassend eine Innenverkleidung eines Fensters (13) nach einem der Ansprüche 1 bis 12 und eine Arretierungsanordnung (65), die ausgebildet ist, um in dem Träger (11) eingerichtet zu sein, wobei die Arretierungsanordnung (65) einen Zusammenwirkungsabschnitt (67) mit dem Verriegelungselement (55) und einen Arretierungsabschnitt (71) umfasst, der ausgebildet ist, um mit dem Verriegelungselement (55) in Verriegelungsposition derart zusammenzuwirken, dass das Lösen der Innenverkleidung eines Fensters (13) aus der Arretierungsanordnung (65) verhindert wird.

14. Polarisierbares Fenstersystem (5), umfassend:
- ein Innenverkleidungssystem (9) nach Anspruch 13, das mit einer Innenverkleidung eines Fensters (13) und einer Arretierungsanordnung (65) versehen ist, und
- ein strukturelles Außenfenster (7), in dem der Träger (11) eingerichtet ist, der zum Zusammenwirken mit der Innenverkleidung eines Fensters (13) bestimmt ist, wobei die Arretierungsanordnung (65) in dem Träger (11) eingerichtet ist.

## Claims

1. An internal trimming window (13) capable of cooperating with a support (11) of a vehicle in a cooperating position, said internal trimming window (13) comprising:
- a polarizable film (21),
- a device for applying a voltage (23) to the polarizable film (21) arranged to vary a degree of opacity of said polarizable film (21), the voltage application device (21) being arranged to be connected to an outer electrical power supply (47),
- a removable fastening device (53) arranged to removably fasten the internal trimming window (13) to the support (11) in a cooperating position, **characterized in that**
the removable fastening device (53) comprises a locking element (55) capable of being displaced by a user between a locking position in which the internal trimming window (13) is fastened to the support (11) and an unlocking position in which the internal trimming window (13) is capable of being disengaged from the support (11).

2. The internal trimming window (13) according to claim 1, wherein the locking element (55) comprises a manual control (57) capable of being manually solicited by a user to dispose the locking element (55) in a locking position or in an unlocking position.

3. The internal trimming window (13) according to claim 2, wherein the manual control (57) is arranged to be displaced according to a degree of freedom (59) between the locking position and the unlocking position.

4. The internal trimming window (13) according to claim 3, wherein the degree of freedom (59) of the manual control (57) between the locking position and the unlocking position is a rotary or helical degree of freedom.

5. The internal trimming window (13) according to any of claims 1 to 4, wherein the removable fastening device (53) further has a locking guide (63) formed in the internal trimming window (13), the locking guide (63) being arranged to guide the locking element (55) between the locking position and the unlocking position.

6. The internal trimming window (13) according to any of claims 1 to 5, comprising at least two removable fastening devices (53).

7. The internal trimming window (13) according to any of claims 1 to 6, further comprising a layer made of a first material (17) arranged to cooperate with a layer made of a second material (19) disposed on the support (11), the cooperation being of a removable link type.

8. The internal trimming window (13) according to any of claims 1 to 7, wherein the voltage application device (23) comprises a control circuit (25) arranged to vary a degree of opacity of said polarizable film (21), the control circuit (25) being formed in the internal trimming window (13).

9. The internal trimming window (13) according to any of claims 1 to 8, wherein the voltage application device (23) comprises a user interface (27) provided with an opacity control (29) and/or an indicator for adjusting the degree of opacity (31).

10. The internal trimming window (13) according to any of claims 1 to 9, comprising a brightness sensor (39), the voltage application device (23) being arranged so that the degree of opacity varies depending on a measurement carried out by the brightness sensor (23).

11. The internal trimming window (13) according to any of claims 1 to 10, comprising at least two polarizable films (21a, 21b), the voltage application device (23) being arranged to independently vary the degree of opacity of each polarizable film (21a, 21b).

12. The internal trimming window (13) according to any of claims 1 to 11, further comprising an electrical connection fitting (43) arranged to electrically connect the internal trimming window (13) to the outer electrical power supply (47).

13. An internal trimming system (9) comprising an internal trimming window (13) according to any of claims 1 to 12 and a blocking arrangement (65) arranged to be formed in the support (11), the blocking arrangement (65) comprising a cooperating portion (67) with the locking element (55) and a blocking portion (71) arranged to cooperate with the locking element (55) in a locking position so as to prevent the detachment of the internal trimming window (13) from the blocking arrangement (65).

14. A polarizable window system (5) comprising:
- an internal trimming system (9) according to claim 13 provided with an internal trimming window (13) and a blocking arrangement (65) and
- an external structural window (7) in which is formed the support (11) intended to cooperate with the internal trimming window (13), the blocking arrangement (65) being formed in the support (11).
